Europäisches Patentamt

European Patent Office

Office européen des brevets

(11) Veröffentlichungsnummer: **0 251 078 B1**

# EUROPÄISCHE PATENTSCHRIFT

(45) Veröffentlichungstag der Patentschrift: **20.03.91**

(51) Int. Cl.⁵ **F16D 3/68**

(21) Anmeldenummer: 87108835.7

(22) Anmeldetag: **19.06.87**

(54) **Elastische Wellenkupplung.**

(30) Priorität: **25.06.86 DE 3621187**

(43) Veröffentlichungstag der Anmeldung:
**07.01.88 Patentblatt 88/01**

(45) Bekanntmachung des Hinweises auf die
Patenterteilung:
**20.03.91 Patentblatt 91/12**

(84) Benannte Vertragsstaaten:
**AT CH ES FR GB IT LI NL SE**

(56) Entgegenhaltungen:
**DE-B- 1 067 644**
**FR-A- 905 631**
**GB-A- 557 133**
**US-A- 3 621 675**

(73) Patentinhaber: **Hackforth GmbH & Co. KG**
**Heerstrasse 66**
**W-4690 Herne 2(DE)**

(72) Erfinder: **Reichardt, Peter**
**Waliser Strasse 6/2**
**W-7140 Ludwigsburg(DE)**

(74) Vertreter: **Finkener und Ernesti Patentanwälte**
**Heinrich-König-Strasse 119**
**W-4630 Bochum 1(DE)**

EP 0 251 078 B1

## Beschreibung

Die Erfindung betrifft eine elastische Wellenkupplung gemäß dem Oberbegriff des Anspruchs 1.

Elastische Wellenkupplungen, bei denen das Drehmoment zwischen krei sförmigen, zueinander koaxia len Kupplungsnaben mit einandergreifenden Nocken oder Zähnen über eine Anzahl von in Umfangsrichtung aufeinanderfolgenden elastischen Kupplungskörpern aus Gummi übertragen wird, sind als sogenannte Klauenkupplungen in verschiedenen Ausführungen bekannt. Den grundsätzlichen Aufbau einer solchen elastischen Klauenkupplung zeigt die DE-AS 10 67 644.

Bei dieser Klauenkupplung befinden sich zwischen je zwei benachbarten Nocken Kammern für di e Aufnahme von je einem im Querschnitt krei sförmigen Kupplungskörper aus Gummi. Dabei sind die Kammern so bemessen, daß bei unbe lasteter Kupplung der in der Kammer befindliche elastische Kupplungskörper mit den die Kammer begrenzenden Nocken nicht in Berührung steht, d.h. daß sich jeder einzelne elastische Kupplungskörper in Umfangsrichtung mit geringem Spiel zwischen den Nocken erstreckt. Als Folge hiervon hat die Klauenkupplung bei Beaufschlagung mit einem Drehmoment in der Nähe des Nullpunktes eine undefinierte Drehsteifigkeit. Nachdem jedoch das geringe Spiel überwunden ist und die elasti schen Kupplungskörper auf Druck beansprucht werden, steigt bei weiterer Drehmomentbeaufschlagung die Drehsteifigkeit sehr schnell auf erhebliche Werte an.

Mit einem solchen Kupplungssystem lassen sich im unteren Drehmomentbereich nach Überwindung des Spiels niedrige definierte Drehsteifigkeiten nicht realisieren. Dies führt beispielsweise in Fahrzeugantrieben mit Verbrennungsmotor beim Anfahren in Bereichen niedriger Drehzahl zum typischen "Getrieberasseln".

Der vorliegenden Erfindung liegt die Aufgabe zugrunde, eine elastische Wellenkupplung nach dem Prinzip einer Klauenkupplung zu verbessern und so zu gestalten, daß ihre Drehsteifigkeit im unteren Drehmomentbereich extrem niedrig ist, daß sie diese niedrige Drehsteifigkeit auch bei mittlerem Nutzdrehmoment Null beibehält und in diesem Betriebszustand spielfrei arbeitet, ohne daß bei voller Auslastung der Wellenkupplung irgendwelche Verschlechterungen in der Drehsteifigkeit im Vergleich zu bekannten elastischen Klauenkupplungen mit zwischengeschalteten elastischen Kupplungskörpern in Kauf genommen werden müssen. Darüber hinaus soll die neue elastische Wellenkupplung eine hohe Funktionssicherheit haben, einen geringen Wartungsaufwand erfordern und kostengünstig herstellbar sein.

Diese Aufgabe wird ausgehend von einer elastischen Wellenkupplung der eingangs beschriebenen Art erfindungsgemäß dadurch gelöst, daß die elastischen Kupplungskörper jeweils an den Mantelflächen des inneren und äußeren Kupplungsringes befestigt sind und daß in der Ruhestellung der Wellenkupplung zwischen jedem elastischen Kupplungskörper und jedem Nocken eines Paares Freiräume vorhanden sind, die eine durch eine anfängliche Schubbeanspruchung der elastischen Kupplungskörper entstehende freie Verformung derselben bis zum Erreichen einer vorgegebenen Schubbeanspruchung ermöglichen, bei der dann die elastischen Kupplungskörper an den jeweils eine Kammer begrenzenden Nocken etwa gleichzeitig zur Anlage kommen.

Die einzelnen elastischen Kupplungskörper haben vor dem Einbau im wesentlichen die Gestalt eines Stabes mit kreisrundem Querschnitt. Im Einbauzustand sind die elastischen Kupplungskörper durch die radial gerichtete Vorspannkraft mehr oder weniger stark zusammengedrückt, so daß ihre Querschnittsform etwa einem Oval entspricht.

Die Befestigung der elastischen Kupplungskörper kann auf einfache Weise dadurch bewirkt werden, daß an den entgegengesetzten Anlageflächen je eine achsparallele Halteleiste im elastischen Kupplungskörper teilweise eingelassen und an diesem befestigt wird, wobei ein gegenüber dem elastischen Kupplungskörper radial überstehender Abschnitt der Halteleiste in einer angepaßten Ausnehmung der Wandung des inneren bzw. äußeren Kupplungsringes gehalten ist. Die Befestigung der Halteleisten am elastischen Kupplungskörper wird vorteilhafterweise durch Vulkanisieren bewirkt. Weiterhin ist es vorteilhaft, den überstehenden Abschnitt einer Halteleiste im Querschnitt schwalbenschwanzartig zu formen und die Aufnahmenut im inneren bzw. äußeren Kupplungsring dieser Querschnittsform anzupassen.

Bei vorgegebenen Außenabmessungen der elastischen Kupplungskörper kann deren elastische Verformbarkeit in gewünschter Weise beeinflußt werden; beispielsweise kann durch die Anbringung einer achsparallelen Durchgangsöffnung in einer bestimmten Größe die Elastizität im Vergleich zu einem elastischen Kupplungskörper als Vollkörper erhöht werden.

Um die Kammern an ihren Stirnenden abzuschließen, ist gemäß einer weiteren Ausgestaltung der Erfindung an beiden Stirnseiten am inneren und äußeren Kupplungsring je ein flacher Abschlußring lösbar befestigt, an denen radial einander zugewandte, abwechselnd mit Spalt ineinandergreifende Zähne angeformt sind, von denen jeweils zwei auf derselben Stirnseite in Umfangsrichtung aufeinanderfolgende Zähne ein Paar bilden und gemeinsam eine Kammer begrenzen. Dabei wird in der Ruhestellung der Wellenkupplung der Spalt zwischen den Zähnen eines Paares wenigstens so groß gewählt, daß bei Erreichen der vorgegebenen Schubbeanspruchung der elastischen Kupplungskörper, d.h. nach entsprechender gegenseitiger Verdrehung der koaxialen Kupplungsringe, die Zähne nicht gegeneinander stoßen. Diese Zähne können nach Erreichen des maximalen Drehmoments durch Anliegen zugleich als Durchdrehsicherung wirken.

Ein Hauptvorteil, den die Erfindung im Vergleich zu einer bekannten elastischen Klauenkupplung bietet, ist darin zu sehen, daß im Bereich kleiner Drehmomente extrem niedrige Drehsteifigkeiten und entsprechend große Drehwinkel erzielbar sind. Dies ist darauf zurückzuführen, daß die elastischen Kupplungskörper im Bereich kleiner Drehmomente anders als bei einer Klauenkupplung zunächst nur auf Schub beanspruchbar sind. Ermöglicht wird diese Schubbeanspruchung durch die Freiräume, die jeweils zwischen einem elastischen Kupplungskörper und den Nocken eines Paares, die die zugehörige Kammer begrenzen, vorhanden sind. Erst nachdem die aus dieser freien Verformung sich ergebende zulässige Schubbeanspruchung der elastischen Kupplungskörper nahezu erreicht ist, kommen die Nocken der beiden Kupplungsringe an den elastischen Kupplungskörpern zur Anlage, wodurch zugleich eine weitere freie Verformung der Kupplungskörper verhindert wird. Mit steigender Drehmomentbelastung der elastischen Wellenkupplung wechselt nun die Beanspruchung der elastischen Kupplungskörper von Schub auf Druck. Von diesem Betriebszustand ab können, wie bei üblichen elastischen Klauenkupplungen, entsprechend hohe Drehmomente übertragen werden.

Ein Ausführungsbeispiel einer elastischen Wellenkupplung gemäß der Erfindung ist in der Zeichnung dargestellt und wird nachfolgend näher erläutert. Es zeigen:

Fig. 1     eine Stirnansicht der elastischen Wellenkupplung, bei der die obere Hälfte in einer Ebene quer zur Drehachse geschnitten ist und

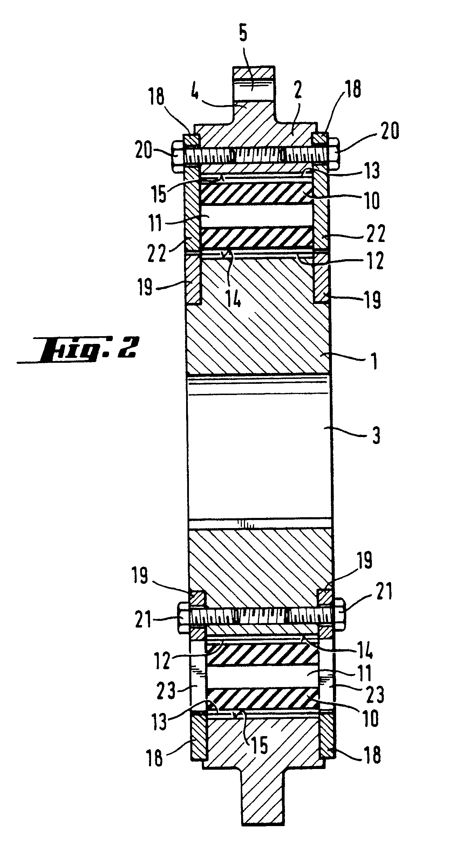

Fig. 2     eine Seitenansicht der elastischen Wellenkupplung mit Schnittdarstellungen in Axialebenen entlang der Linie I-I der Fig. 1.

Die metallischen Kupplungsteile der elastischen Wellenkupplung sind gebildet aus einem inneren Kupplungsring (1) und einem koaxial äußeren Kupplungsring (2). Dabei ist der innere Kupplungsring (1) mit einer zentralen Bohrung (3) zur Aufnahme einer nicht dargestellten Antriebs- oder Abtriebswelle versehen.

Der äußere Kupplungsring (2) enthält an seinem Umfang einen Flanschring (4) mit einer Anzahl in Umfangsrichtung mit gleichem Abstand aufeinanderfolgenden achsparallelen Durchgangsbohrungen (5), die zur Aufnahme von Befestigungsschrauben dienen, mittels der die elastische Wellenkupplung mit einem weiteren Antriebsteil verbindbar ist.

Am inneren Kupplungsring (1) sind an seiner äußeren zylindrischen Mantelfläche (6) mehrere in Umfangsrichtung mit gleichem Abstand aufeinanderfolgende, etwa radial stehende Nocken (7) angeformt, die im Querschnitt etwa sichelförmig ausgebildet sind. Die freien Enden der Nocken (7) erstrecken sich bis in die Nähe der inneren Mantelfläche (8) des äußeren Kupplungsringes (2). Von der Mantelfläche (8) erstreckt sich eine gleiche Anzahl von Nocken (9) radial nach innen, die im Querschnitt in gleicher Weise wie die Nocken (7) geformt sind, jedoch mit ihrer Sichelkrümmung entgegengesetzt gerichtet sind.

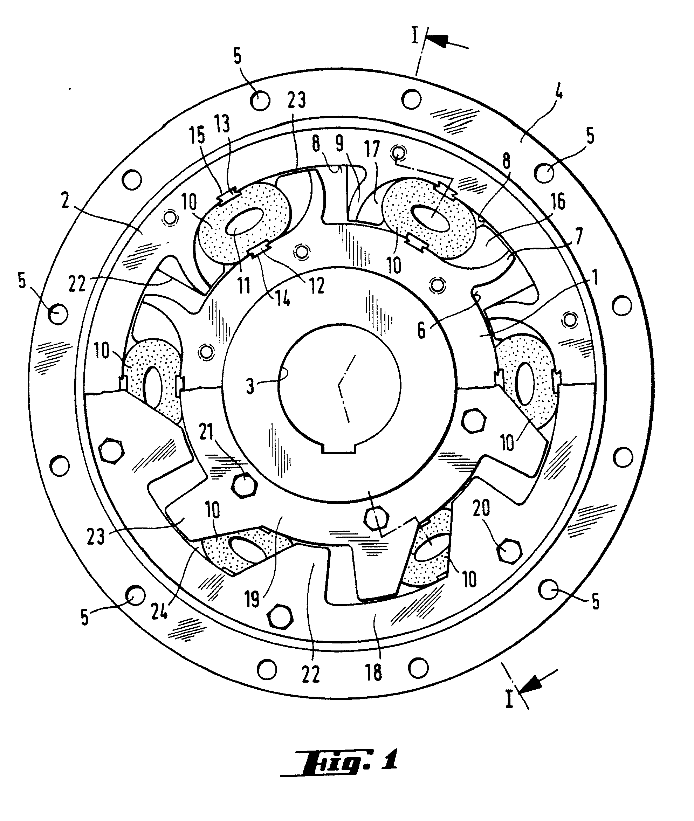

Jeweils ein vom äußeren Kupplungsring (2) ausgehender Nocken (9) und ein in Umfangsrichtung nächstfolgender Nocken (7) des inneren Kupplungsringes (1) bilden ein Nockenpaar. Die Nocken (9, 7) eines Paares begrenzen jeweils eine in Achsrichtung verlaufende Kammer; bei dem Ausführungsbeispiel enthält die Wellenkupplung insgesamt sechs Kammern. In jeder Kammer ist ein elastischer Kupplungskörper (10) aus Gummi oder dergleichen angeordnet, dessen axiale Länge der axialen Länge der Kammer, d.h. der axialen Länge der Kupplungsringe (1, 2) entspricht. Die elastischen Kupplungskörper (10), die vor ihrem Einbau die Gestalt eines kreiszylindrischen Stabes haben, sind im Einbauzustand in radialer Richtung zusammengepreßt und nehmen dabei die aus Fig. 1 ersichtliche ovale Querschnittsform an. Durch dieses Zusammenpressen werden die elastischen Kupplungskörper (10) einer vorgegebenen, radial gerichteten Vorspannung unterworfen. Jeder elastische Kupplungskörper (10) enthält im Ausgangszustand eine kreisrunde Durchgangsöffnung (11), die sich durch das Zusammenpressen zu einer ovalen Durchgangsöffnung verformt (Fig. 1). Durch Festlegung der Querschnittsgröße dieser Öffnung kann die Elastizität der Kupplungskörper (10) und damit die Drehsteifigkeit der Wellenkupplung verändert werden.

An ihren Anlageflächen sind die elastischen Kupplungskörper (10) einerseits am inneren Kupplungsring (1) und andererseits am äußeren Kupplungsring (2) befestigt. Hierzu ist an jeder Anlagefläche mittig zu dieser in einer achsparallelen Nut eine Halteleiste (12, 13) eingelassen, von der ein überstehender Abschnitt im Querschnitt schwalbenschwanzförmig ausgebildet ist. Die Halteleisten (12, 13) sind vorzugsweise durch Vulkanisieren mit dem elastischen Kupplungskörper (10) fest verbunden. Die überstehenden, schwalbenschwanzförmigen Abschnitte der Halteleisten (12, 13) sind jeweils in einer angepaßten Nut (14) im inneren Kupplungsring (1) bzw. (15) im äußeren Kupplungsring 2) formschlüssig gehalten. Beim Einsetzen eines elastischen Kupplungskörpers (10) in seine Einbaulage wird der entsprechend zusammengedrückte elastische Kupplungskörper mit seinen beiden Halteleisten (12, 13) von einer Stirnseite her in axialer Richtung in die Nuten (14, 15) eingeschoben.

Fig. 1 zeigt die elastische Wellenkupplung in der unbelasteten Ruhestellung. In dieser Stellung füllen die elastischen Kupplungskörper (10) die Kammern in der Umfangsrichtung nicht vollständig aus. Vielmehr ist auf der Front- und Rückseite jeweils ein Freiraum (16, 17) vorgesehen. Bei Belastungsaufnahme der Wellenkupplung, d.h. wenn sich beispielsweise der äußere Kupplungsring (2) im Uhrzeigersinn gegenüber dem inneren Kupplungsring verdreht, können sich die elastischen Kupplungskörper (10) dank der Freiräume (16, 17) zunächst frei verformen und somit auf Schub beansprucht werden.

Die Größe der Freiräume (16, 17) wird so gewählt, daß bei Erreichen einer vorgegebenen Schubbeanspruchung der elastischen Kupplungskörper (10) die zugehörigen Nocken (7, 9) etwa gleichzeitig an den entgegengesetzten Mantelflächen der elastischen Kupplungskörper (10) zur Anlage kommen. Danach ist eine weitere freie Verformung der elastischen Kupplungskörper (10) nicht mehr möglich; sie sind vielmehr nur noch auf Druck beanspruchbar.

In der ersten Phase der Lastaufnahme der Wellenkupplung wird die Drehsteifigkeit der Wellenkupplung nur durch die Schubkräfte bestimmt, die bei der freien Verformung der elastischen Kupplungskörper (10) auftreten. Da diese Kräfte vergleichsweise gering sind, hat die Wellenkupplung in der Anlaufphase eine extrem niedrige Drehsteifigkeit, die allein aus der Schubbeanspruchung der elastischen Kupplungskörper resultiert und genau definierbar ist, auch bei Nutzdrehmoment Null. Als weiterer Vorteil kommt hinzu, daß in dieser ersten Phase der Lastaufnahme mit extrem niedriger Drehsteifigkeit die beiden metallischen Kupplungsteile spielfrei miteinander in Verbindung stehen.

Nach überwindung der Freiräume (16, 17) d.h. nachdem die Nocken (7, 9) jedes Paares am zugehörigen elastischen Kupplungskörper (10) anliegen, ist eine weitere freie Verformung der elastischen Kupplungskörper (10) nicht mehr möglich. Die Beanspruchung der elastischen Kupplungskörper (10) wechselt von Schub auf Druck. Die Wallenkupplung kann nun das vorgegebene hohe Drehmoment bei entsprechend hoher Drehsteifigkeit übertragen.

Wie festgestellt wurde, kann das Ausmaß der freien Verformung der elastischen Kupplungskörper (10) an ihrer Frontseite geringfügig größer als an ihrer Rückseite sein. Um sicherzustellen, daß die Nocken (7, 9) nach Beendigung der freien Verformung der elastischen Kupplungskörper (10) dennoch etwa gleichzeitig zur Anlage kommen, wählt man auf der Vorderseite die Spaltweite des Freiraumes (16) etwas größer als auf der Rückseite des zugehörigen elastischen Kupplungskörpers (10).

Für den stirnseitigen Abschluß der Kammern ist an jeder Stirnseite der Wellenkupplung je ein flacher äußerer und gleichstarker radial innerer Abschlußring (18, 19) vorgesehen. Die Abschlußringe auf der entgegengesetzten Seite der Wellenkupplung sind in gleicher Weise ausgebildet. Für diese sind daher in der Zeichnung besondere Bezugszahlen nicht vorgesehen. Jeder der beiden Abschlußringe (18, 19) ist mit Hilfe von Schraubenbolzen (20, 21), die in achsparallelen Gewindebohrungen der Kupplungsringe (2 bzw. 1) eingreifen, an diesen lösbar befestigt. An ihren einander zugewandten axialen Mantelflächen sind abwechselnd mit Spiel ineinandergreifende Zähne (22 bzw. 23) angeformt, deren freie Enden sich bis in die Nähe der jeweils gegenüberliegenden Mantelfläche erstrecken.

Wie Fig. 1 zeigt, sind die Zähne (22, 23) trapezförmig ausgebildet, wobei die schräg verlaufenden Flanken von zwei aufeinanderfolgenden Zähnen (22, 23) einander zugewandt sind. Zwei mit ihren schrägen Flanken einander zugewandte Zähne (22, 23) bilden ein Paar und begrenzen gemeinsam eine Kammer an ihrer Stirnseite, wobei in der Ruhestellung der Wellenkupplung die Zähne (22, 23) eines Paares etwa symmetrisch zur Mittenachse der Kammer liegen und dabei das vordere und hintere Ende des zugehörigen elastischen Kupplungskörpers (10) teilweise überdecken. Zwischen den Zähnen (22, 23) eines Paares ist ein Spalt (24) freigelassen, der wenigstens so groß ist, daß bei Erreichen der vorgegebenen Schubbeanspruchung der elastischen Kupplungskörper (10) die Zähne (22, 23) nicht gegeneinander stoßen.

Eine solche elastische Wellenkupplung ist nur für eine Arbeitsweise in einer Drehrichtung einsetzbar. Soll von den Vorteilen, die diese Wellenkupplung bietet, auch bei reversierbaren Antrieben Gebrauch gemacht werden, können ohne weiteres zwei Einzelkupplungen für entgegengesetzte Antriebsrichtungen hintereinander geschaltet werden.

## Ansprüche

1. Elastische Wellenkupplung mit zwei, je mit Antrieb und Abtrieb verbindbaren metallischen Kupplungsteilen (1,2), bei der das Drehmoment zwischen diesen Kupplungsteilen über eine Anzahl von in Umfangsrichtung aufeinanderfolgenden elastischen Kupplungskörpern (10) aus Gummi oder dergleichen übertragbar ist, wobei die metallischen Kupplungsteile aus einem inneren und einem koaxial äußeren Kupplungsring bestehen, an denen an ihren einander zugewandten Mantelflächen (6,8)in der Umfangsrichtung mehrere abwechseld ineinandergreifende etwa radial stehende und über die axiale Länge der Kupplungsringe (1,2)sich erstreckende Nocken (7,9)bzw. Zähne angeformt sind, die sich bis in die Nähe der jeweils gegenüberliegenden Mantelfläche erstrecken, und bei denen jeweils zwei in Umfangsrichtung aufeinanderfolgende Nocken(7,9) ein Paar bilden, deren einander zugewandte Oberflächen konkav geformt sind und je eine mit ihrer Längsachse parallel zur Drehachse verlaufende Kammer mit einem darin befindlichen elastischen Kupplungskörper(10)begrenzen, wobei die elastischen Kupplungskörper(10)vor dem Einbau im wesentlichen die Gestalt eines kreiszylindrischen Stabes haben mit einer Länge etwa entsprechend der axialen Länge der Kupplungsringe und im Einbauzustand unter vorgegebener radialer Vorspannung stehen. dadurch gekennzeichnet, daß die elastischen Kupplungskörper (10) jeweils an den Mantelflächen (6, 8) des inneren und äußeren Kupplungsringes (1, 2) befestigt sind und daß in der Ruhestellung der Wellenkupplung zwischen jedem elastischen Kupplungskörper (10) und jedem Nocken (7, 9) eines Paares Freiräume (16, 17) vorhanden sind, die eine durch eine anfängliche Schubbeanspruchung der elastischen Kupplungskörper (10) entstehende freie Verformung derselben bis zum Erreichen einer vorgegebenen Schubbeanspruchung ermöglichen, bei der dann die elastischen Kupplungskörper (10) an den jeweils eine Kammer begrenzenden Nocken (7, 9) etwa gleichzeitig zur Anlage kommen.

2. Wellenkupplung nach Anspruch 1, dadurch gekennzeichnet, daß an den radial entgegengesetzten Mantelflächen. an denen die elastischen Kupplungskörper am inneren und äußeren Kupplungsring (1, 2) anliegen, je eine achsparallele Halteleiste (12, 13) im elastischen Kupplungskörper (10) teilweise eingelassen und an diesem befestigt ist und daß ein gegenüber dem elastischen Kupplungskörper (10) radial überstehender Abschnitt der Halteleiste (12 bzw. 13) in einer angepaßten Ausnehmung (14 bzw. 15) der Wandung des inneren bzw. äußeren Kupplungsringes (1 bzw. 2) gehalten ist.

3. Wellenkupplung nach Anspruch 2, dadurch gekennzeichnet, daß die Halteleisten (12, 13) mittels Vulkanisieren am elastischen Kupplungskörper (10) befestigt sind.

4. Wellenkupplung nach Anspruch 2 oder 3, dadurch gekennzeichnet, daß der überstehnde Abschnitt der Halteleisten (12, 13) im Querschnitt schwalbenschwanzartig geformt und in einer entsprechend geformten Nut ( 14 bzw. 15) im inneren bzw. äußeren Kupplungsring (1 bzw. 2) gehalten ist.

5. Wellenkupplung nach einem der Ansprüche 1 bis 4, dadurch gekennzeichnet, daß die elastischen Kupplungskörper (10) eine mittige, achsparallele Durchgangsöffnung (11) enthalten.

6. Wellenkupplung nach einem der Ansprüche 1 bis 5, dadurch gekennzeichnet, daß an beiden Stirnseiten am inneren und äußeren Kupplungsring (1 bzw. 2) je ein flacher Abschlußring (18 bzw. 19) lösbar befestigt ist, an denen radial einander zugewandte, abwechselnd mit beidseitigen Spalten ineinandergreifende Zähne (22, 23) angeformt sind, von denen jeweils zwei auf derselben Stirnseite in Umfangsrichtung aufeinanderfolgende Zähne (22, 23) ein Paar bilden und gemeinsam eine Kammer begrenzen.

7. Wellenkupplung nach Anspruch 6, dadurch gekennzeichnet, daß in der Ruhestellung der Wellenkupplung der Spalt (24) zwischen den Zähnen (22, 23) eines Paares wenigstens so groß ist, daß bei Erreichen der vorgegebenen Schubbeanspruchung der elastischen Kupplungkörper (10) die Zähne (22, 23) nicht gegeneinander stoßen.

## Claims

1. Resilient shaft coupling with two metal coupling parts (12), one of which can be connected to an input and the other to an output, in which coupling the torque between these coupling parts can be transmitted via a number of resilient coupling bodies (10) of rubber or the like succeeding each other in circumferential direction, wherein the metal coupling parts are composed of an inner and coaxially outer coupling ring, on which are formed on their cylindrical surface areas (6 and 8) facing each other, several cams (7 and 9) or teeth which engage in each other alternately in circumferential direction, stand roughly radially and extend over the axial length of the coupling rings (12), and which extend into the vicinity of the facing cylindrical surface area in each case, and two cams (7 and 9) which succeed each other in circumferential direction each form a pair whose surfaces facing each other are concavely shaped and each define a chamber with its longitudinal axis running parallel to the axis of rotation and having a resilient coupling body (10) therein, wherein the resilient coupling bodies (10), before installation, essentially have the shape of a circular cylindrical rod with a length roughly corresponding to the axial length of the coupling rings, and the installed state are under a predetermined radial prestress, characterised in that the resilient coupling bodies (10) are fastened to the cylindrical surface areas (6 and 8) of the inner and outer coupling ring (1 and 2) respectively, and that in the inoperative position of the shaft coupling, free spaces (16 and 17) exist between each resilient coupling body (10) and each cam (7 and 9) of a pair, which make possible through an initial shear stress of the resilient coupling bodies (10), a free deformation of the same until a predetermined shear stress is reached, in which the resilient coupling bodies (10) then come into abutment more or less simultaneously against the cams (7 and 9) each defining a chamber.

2. Shaft coupling as claimed in Claim 1, characterised in that on the radially opposite cylindrical surface areas, on which the resilient coupling bodies butt against the inner and outer coupling ring (1 and 2), an axially parallel retaining strip (12 and 13) is partly inserted in the resilient coupling body (10) and is fastened to the latter, and a section of the retaining strip (12 and 13) which projects radially in relation to the resilient coupling body (10) is retained in a matching cavity (14 or 15) of the wall of the inner or outer coupling ring (1 or 2).

3. Shaft coupling as claimed in Claim 2, characterised in that the retaining strips (12 and 13) are fastened to the resilient coupling body (10) by means of vulcanisation.

4. Shaft coupling as claimed in Claim 2 or Claim 3, characterised in that the projecting section of the retaining strips (12 and 13) is dovetail-shaped in crosssection and is retained in a correspondingly shaped groove (14 or 15) in the inner or outer coupling ring (1 or 2).

5. Shaft coupling as claimed in any one of Claims 1 to 4, characterised in that the resilient coupling bodies (10) comprise a central axially parallel through-hole (11).

6. Shaft coupling as claimed in any one of Claims 1 to 5, characterised in that there is detachably fastened to both front faces on the inner and outer coupling ring (1 or 2) a flat end ring (18 or 19) respectively, on which are formed teeth (22 and 23) which face each other radially and engage in each other alternately with gaps on both sides, of which two teeth (22 and 23) succeeding each other in circumferential direction form a pair and together define one chamber.

7. Shaft coupling as claimed in Claim 6, characterised in that in the inoperative position of the shaft coupling, the gap (24) between the teeth (22 and 23) of one pair is at least so large that the teeth (22 and 23) do not butt against each other when the predetermined shear stress of the resilient coupling bodies (10) is reached.

**Revendications**

1. Accouplement d'arbres êlastique présentant deux parties métalliques d 'accouplement (1, 2), pouvant être respectivement reliées au côté menant et au côté mené, dans lequel le couple de rotation entre ces parties d'accouplement peut être transmis par l'intermédiaire d'un certain nombre de corps élastiques d'accouplement (10) en caoutchouc ou matériau similaire, se succédant mutuellement dans le sens circonférentiel, les parties métalliques d'accouplement se composant d'une bague interne d'accouplement et d'une bague d'accouplemen t coaxialement externe, sur les surfaces périphériques (6, 8) mutuellement opposées desquelles sont ménagées solidairement, dans le sens circonférentiel, plusieurs cames (7, 9) ou dents qui pénètrent alternativement les unes dans les autres, se dressent sensiblement dans le sens radi al , s 'étendent sur la longueur axi ale des bagues d'accouplement (1, 2), se prolongent jusqu' à proximi té de la surface périphérique respectivement opposée, et parmi l esquel l es deux cames respecti ves (7, 9) , se succédant dans l e sens ci rconférentiel , forment une paire dont l es faces supérieures mutuell ement en vi s-à-vi s sont de confi gurati on concave, et dél imitent chacune une chambre dont l'axe l ongi tudinal s'étend paral lèlement à l'axe de rotation, et dans laquel le se trouve un corps él astique d ' accoupl ement (10), accoupl ement dans lequel les corps él asti ques d ' accoupl ement (10) revêtent pour l'essentiel, préal ablement à l' incorporation, la forme d'une barrette cyl indrique droite d'une longueur correspondant sensi bl ement à la longueur axi al e des bagues d'accoupl ement, et son t soumi s, à l'état incorporé, à une précharge radiale préétablie, caractérisé par le fait que les corps élastiques d'accouplement (10) sont respectivement fixés aux surfaces périphériques (6, 8) des bagues d'accouplement (1, 2) interne et externe ; et par la présence en position de repos de l'accouplement d'arbres, entre chaque corps élastique d'accouplement (10) et chaque came (7, 9) d'une paire, d'espaces libres (16, 17) qui autorisent une déformation libre des corps élastiques d'accouplement (10), provoquée par une sollicitation initiale de ces derniers à la poussée, jusqu'à atteindre une sollicitation à la poussée préétablie, en présence de laquelle les corps élastiques d'accouplement (10) viennent en-suite s'appliquer, à peu près simultanément, contre les cames (7, 9) délimitant respectivement une chambre.

2. Accouplement d'arbres, selon la revendication 1, caractérisé par le fait que, sur les surfaces périphériques radialement opposées, sur lesquelles les corps èlastiques d'accouplement portent contre les bagues d'accouplement (1, 2) interne et externe, une moulure respective de retenue (12, 13) à axe parallèle est partiellement noyée dans le corps élastique d'accouplement (10), et est fixée à celui-ci ; et par le fait qu'une région de la moulure de retenue (12, respectivement 13), dépassant radialement par rapport au corps élastique d'accouplement (10), est arrêtée dans un évidement adapté (14, respectivement 15) de la paroi de la bague d'accouplement (1 ou 2 ) respectivement interne ou externe.

3. Accouplement d'arbres, selon la revendication 2, caractérisé par le fait que les moulures de retenue (12, 13) sont fixées par vulcanisation sur le corps élastique d'accouplement (10).

4. Accouplement d'arbres, selon la revendication 2 ou 3, caractérisé par le fait que la région débordante des moulures de retenue (12, 13) présente une configuration de section transversale en queue d'aronde, et est arrêtée dans une gorge (14, respectivement 15) de configuration correspondante, ménagée dans la bague d'accouplement (1 ou 2) respectivement interne ou externe.

5. Accouplement d'arbres, selon l'une des revendications 1 à 4, caractérisé par le fait que les corps élastiques d'accouplement (10) sont percés d'un orifice central de passage (11) à axe parallèle.

6. Accouplement d'arbres, selon l'une des revendications 1 à 5, caractérisé par le fait qu'une bague aplatie de fermeture (18, respectivement 19) est respectivement fixée de manière libérable, aux deux faces extrêmes, sur les bagues d'accouplement (1, respectivement 2) interne et externe, bagues sur lesquelles sont ménagées solidairement des dents (22, 23) qui se font mutuellement face dans le sens radial, s'interpénètrent en alternance avec des interstices de part et d'autre, et parmi lesquel les deux dents respectives (22, 23), se succédant dans le sens circonférentiel sur la même face extrême, forment une paire et délimitent associativement une chambre.

7. Accouplement d'arbres, selon la revendication 6, caractérisé par le fait que, en position de repos de cet accouplement d'arbres, l'interstice (24) entre les dents (22, 23) d'une paire présente au moins une valeur telle que les dents (22, 23) ne butent pas mutuellement lorsqu'est atteinte la sollicitation préétablie des corps élastiques d'accouplement (10) à la poussée.

**Fig. 1**

Fig. 2